(19) Europäisches Patentamt
European Patent Office
Office européen des brevets

(11) EP 2 075 272 A1

(12) EUROPEAN PATENT APPLICATION

(43) Date of publication:
**01.07.2009 Bulletin 2009/27**

(51) Int Cl.:
***C08G 18/67*** *(2006.01)* ***C08G 18/81*** *(2006.01)*

(21) Application number: **07025210.1**

(22) Date of filing: **28.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Mnemoscience GmbH**
**52531 Uebach-Palenberg (DE)**

(72) Inventors:
- **Hasson, Ali Abdulla Tareq**
**56062 Aachen (DE)**
- **Boltersdorf, Dagmar**
**52372 Kreuzau (DE)**
- **Komoll, Torsten**
**4700 Eupen (BE)**
- **Krautschick, Mario**
**41836 Hückelhoven (DE)**

(74) Representative: **Grünecker, Kinkeldey, Stockmair & Schwanhäusser**
**Anwaltssozietät**
**Leopoldstrasse 4**
**80802 München (DE)**

(54) **Shape memory polymer networks from crosslinkable thermoplasts**

(57) The invention relates to a shape memory polymer precursor, that is a thermoplastic composition, and includes at least one block polymer comprising at least polymer blocks originating from an oligomeric diol, that are linked by a diisocyanate, wherein the block polymer optionally includes an additional unit also linked by the diisocyanate, **characterized in that** the diisocyanate, and/or the additional unit include(s) at least one crosslinkable group, and that the precursor can be crosslinked to obtain a shape memory polymer network, as well as to shape memory polymer networks obtained therefrom by crosslinking.

EP 2 075 272 A1

## Description

## BACKGROUND OF THE INVENTION

### 1. Field of the Invention

The invention relates to a precursor for a shape memory polymer network (SMP precursor), convenient processing methods using said precursor, SMP polymer networks (thermosets) obtainable by crosslinking the precursor, as well as articles thereof, the production of such articles, their programming and their use.

### 2. Description of the Related Art

The shape memory effect (SME) or shape memory functionality is a phenomenon already known and established for metal alloys as well as polymers. Shape memory functionality is the ability of a material to temporarily fix a second shape after an elastic deformation and only recover the original (first shape or permanent shape) after application of an external stimulus. The advantageous and intriguing properties of shape memory materials are in particular the possibility to initiate a desired change in shape by an appropriate external stimulus, so that an original shape, after deformation, is re-established, and the possibility to deform and program these materials so that highly specific configurations and shape changes can be obtained. The deformed shape is often called the temporary shape. The effect/functionality results from a combination of material structure and specific functionalization processes.

As indicated above, the first materials known to provide this functionality were metallic shape memory alloys. Recently, shape memory polymers (SMPs) have been developed to replace or augment the use of SMAs, in part because the polymers are light, high in shape recovery ability, easy to manipulate, and economical, and have a better biocompatibility as compared with SMAs. Typical SMPs are, for example, phase segregated linear block copolymers, having a hard segment and a switching (soft) segment, typically thermoplastic materials. The hard segment usually fixes the permanent form and is typically crystalline, with a defined melting point, and the soft segment is typically amorphous, with a defined glass transition temperature. In some embodiments, however, the hard segment is amorphous and has a glass transition temperature rather than a melting point. In other embodiments, the soft segment is crystalline and has a melting point rather than a glass transition temperature. The melting point or glass transition temperature of the soft segment is substantially less than the melting point or glass transition temperature of the hard segment.

As described above, the SME is enabled by the SMP's structure and morphology but is only available after modification, in particular deformation, of the permanent shape into a temporary shape, a process that is usually called the programming of a SMP. The material can readily recover to its original molded shape following numerous thermal cycles, and a thermoplastic SMP can be heated above the melting point of the hard segment and reshaped and cooled to fix a new original shape. Properties that describe the shape memory capabilities of a material are, for example, the shape recovery of the original shape and the shape fixity of the temporary shape.

When a thermoplastic SMP is heated above the melting point or glass transition temperature of the hard segment, the material can be shaped. This shape, also called the original or permanent shape, can be memorized by cooling the SMP below the melting point or glass transition temperature of the hard segment.

A specific class of SMPs are polymer networks (thermosets) including soft segments (switching segments) and chemical (e.g., covalent network points / crosslinks)_, which provide the function of the hard segments, so that for SMP networks the permanent shape is determined by the covalent network structure.

Representatives SMPs are disclosed in U.S. Patent Nos. 6,720,402; 6,388,043; 6,160,084; 7,217,744; 6,852,825; and No. 7,037,984, international publications WO99/42528, WO 99/42147, WO 2004/046221, WO 2004/062706, WO 2004/090042, WO 2005/012388, WO 2005/028534, WO 2007/096708, and European publications EP1846470 and EP 1818348.

SMPs that can form objects which are able to hold more than one shape in memory are known from (e.g., U.S. Patent Nos. 6,720,402 and US 6,388,043 and WO99/42528 These SMPs have shapes in memory that are elicited by a stimulus other than the commonly used change (increase) in temperature, for example the application of light, changes in ionic concentration and/or pH, electric field, magnetic field or ultrasound. EP1818161 discloses specific SMP embodiments, wherein different stimuli are used to mutually independently trigger the release of two or more shapes in memory, the disclosure of which is incorporated herein by reference. Specific SMPs sensitive to light are known from WO 2004/062706, and those sensitive to pH and/or ionic strength from EP1837160 and EP1818346. SMPs especially suitable to control drug release by the SME are disclosed in WO 2004/006885 and U.S. Patent Application Publication No. 2006/0140999.

Thermoplastic SMPs typically can be processed conveniently using conventional methods like extrusion and injection molding. Such polymers are very versatile and allow a broad range of smart commercial uses. Nevertheless they have some drawbacks for specific applications, such as where precisely reproducible mechanical properties and

mechanical long-term stability are needed because thermoplastic SMPs may show viscoelastic effects within the programming cycle and during storage. Thereby the shape memory properties can be weakened perpetually and the shape recovery can be reduced, so that the permanent form is no longer quantitatively retrievable. In addition thermoplastic polymers often show a dissatisfactory mechanical stability, if they have to withstand an external force, like e.g. the radial force exerted on a tubular device (e.g., a stent in a vessel). Such can lead to a failure called recoil, whereby the open diameter of a stent is reduced.

The known three dimensionally covalently crosslinked SMP networks (thermosets) usually have a lower tendency for recoil and a better mechanical long-term stability of their shape memory properties compared to SMP thermoplasts, but unfortunately are difficult to handle in conventional processing methods for polymers like extrusion or injection molding, and often cannot be processed therewith at all.

Therefore, it was an object of the invention to find shape memory materials, that can be processed conveniently and cost efficiently, but have comparable or even better mechanical properties, a higher mechanical long-term stability, and a lower recoil then known crosslinked polymer systems.

It was also an object of the invention to provide a processing method to advantageously manufacture three dimensional SMP devices of high quality (e.g., tubes or filaments, and in particular medical devices like stents).

## BRIEF SUMMARY OF THE INVENTION

The present invention solves the above objects with the precursors for a shape memory polymer network ("SMP precursors"). It was found, that the SMP precursor material of the invention can conveniently and cost efficiently be processed using known methods like e.g. extrusion or injection molding. After the processing the material can be crosslinked and thereby devices with advantageous mechanical and shape memory properties and a high mechanical long-term stability are achieved, that show less tendency for recoil than known materials.

The present invention provides the subject matter as defined in the claims and the following specification. Inembodiemnts the present invention relates to the following items:

1. A shape memory polymer precursor comprising at least one block polymer comprising polymer blocks originating from an oligomeric diol linked by a diisocyanate;
wherein the block polymer optionally comprises at least one additional covalently linked unit also linked by the diisocyanate, wherein at least one of the diisocyanate and the additional covalently linked unit comprises at least one crosslinkable group;
wherein the precursor can be crosslinked to obtain a shape memory polymer network; and
wherein said shape memory polymer precursor is a thermoplastic composition.

2. The shape memory polymer precursor according to item 1, wherein said additional covalently linked unit originates from at least one of a low-molecular weight diol and an oligomeric diol.

3. The shape memory polymer precursor according to any of items 1-2, wherein the crosslinkable group is an organic group comprising at least one of a substituted ethenylene group or an unsubstituted ethenylene group.

4. The shape memory polymer precursor according to item 3, wherein the crosslinkable group is form of at least one of a vinyl group, a substituted acrylate group or an unsubstituted acrylate group.

5. The shape memory polymer precursor according to any of items 1-4, further comprising at least one polymeric, oligomeric and low-molecular weight ingredient,
wherein said at least one polymeric, oligomeric and low-molecular weight ingredient advantageously influences the desired properties of polymers.

6. A method for forming a shape memory polymer precursor comprising processing the shape memory polymer precursor according to any of items 1-5 by at least one conventional method for forming thermoplastic polymers into a shape.

7. A method for producing a shape memory polymer network comprising crosslinking at least one shape memory polymer precursor according to any of items 1-5.

8. The method according to item 7, wherein at least one of UV radiation and thermal energy is used to initiate said crosslinking.

9. The method according to any of items 7-8, wherein said crosslinking is performed at temperatures sufficiently low that the polymer is mechanically stable under the applied temperatures.

10. A shape memory polymer network, wherein said shape memory polymer network is obtained by the method according to any of items 7-9.

11. The shape memory polymer network according to item 10, wherein said shape memory polymer network has at least one shape in memory.

12. A method for forming a shape memory polymer network article comprising forming a shape memory polymer precursor comprising processing the shape memory polymer precursor according to any of items 1-5 by at least one conventional method for forming thermoplastic polymers into a shape followed by the method according to any of items 7-9.

13. A shape memory polymer network articlewherein said shape memory polymer network comprises a shape memory polymer network according to any of items 10-11.

14. The shape memory polymer network article according to item 13, wherein said shape memory polymer network is produced according to the method of item 12.

15. The shape memory polymer network article according to any of items 13 or 14, wherein said shape memory polymer network at least partially encloses a hollow space.

16. A shape memory polymer network article according to any of items 13 to 15, wherein said shape memory polymer network article is at least one of sutures, orthodontic materials, bone screws, rods, pins, screws in general, nails, plates, catheters, tubes, films, stents, PFO devices, orthopedic braces, splints, tape for preparing casts, and scaffolds for tissue engineering, contact lenses, drug delivery devices, implants, diapers, packaging materials, automobile parts, switches, sensors, locking systems, spectacles, recyclable or reusable products, and thermal indicators.

17. A method of programming a shape memory polymer network article comprising i) heating said shape memory polymer network article to a temperature that is above the transition temperature of at least one of its soft segments, but below the decomposition temperature of said shape memory polymer network article, ii) forming said shape memory polymer network article into an arbitrary shape, and fixing in this shape until iii) the temperature has been reduced below said transition temperature of said shape memory polymer network article; wherein said shape memory polymer network article is at least one shape memory polymer network article according to any of items 13-16.

18. The shape memory polymer network article according to any of items 13-16, wherein said shape memory polymer network article has at least one shape in memory.

19. The shape memory polymer network article according to item 18, wherein said shape memory polymer network article is obtained by the method of item 17.

20. Use of the shape memory polymer network article, wherein said shape memory polymer network article is at least one shape memory polymer network article according to any of items 13-16 and 18-19.

## DETAILED DESCRIPTION OF THE INVENTION

One aspect of the invention includes a shape memory polymer precursor, that is a thermoplastic composition, and includes at least one block polymer (the block polymer of the invention) including at least polymer blocks originating from an oligomeric diol (diol A of the invention), that are linked by a diisocyanate, wherein the block polymer optionally includes an additional unit also linked by the diisocyanate, characterized in that the diisocyanate, and/or the additional unit include(s) at least one crosslinkable group, and that the precursor can be crosslinked to obtain a shape memory polymer network.

The term "block polymer" according to the invention means that the polymer includes at least one oligomeric block, that can act as a soft segment and thereby enables a shape memory effect after crosslinking of the polymer. Preferably such oligomeric blocks have a mean molecular weight of from approximately 1,000 g/mol to approximately 20,000 g/mol, in particular of from approximately 1,500 g/mol to approximately 15,000 g/mol. The block polymer preferably is essentially linear, what means in the context of the invention, that it predominantly includes a linear chain and is only

crosslinked two-dimensionally or three-dimensionally to a small extent. The degree of crosslinking of the block polymer of the invention should be low enough that the shape memory polymer precursor can be processed by conventional methods like extrusion or injection molding.

As far as the present application refers to low molecular weight compounds, segments, components etc. the present invention refers to a mean molecular weight of 1000 g/mol or less, in embodiments 500 g/mol or less, such as from 100 g/mol to 400 g/mol, or from 150 g/mol to 300 g/mol. When the present invention refers to oligomers or oligomeric segments, compounds, components etc. the present invention refers to a mean molecular weight as defined above in paragraph [0016], and in embodiments to mean molecular weights of from 2000 g/ mol to 10000 g/mol. All mean molecular weights refer, unless otherwise stated, to number average values as obtained by SEC (GPC) described later.

The oligomeric diol of the invention preferably is a terminally α,ω-dihydroxy substituted oligomeric compound, as is in more detail described below, and the additional unit, that may optionally be present in the block polymer of the invention preferably also has two hydroxy groups that can react with isocyanate groups. If no additional unit is included in the block polymer, it is a polyurethane or polyester urethane (if the diol includes ester groups) that alternatingly includes oligomeric blocks originated from the oligomeric diol, linked by urethane bonds to the linking member originating from the diisocyanate. If an additional covalently linked unit is included, this unit must also be difunctional and be suitable to react with the diisocyanate to be included in the chain of the block polymer. A preferred additional unit of the invention is selected from a low-molecular weight diol or an oligomeric diol (diol B). In the case of at least one additional unit being present in the block polymer, the polymer blocks originating from diol A and the members originating from the additional units (e.g., diol B) preferably are randomLy linked by the diisocyanate, but it is also within the context of the invention to prepare block polymers with a defined number of directly linked diols A and/or additional units (e.g., diols B) by synthetical methods known for block copolymers.

The crosslinkable group of the invention can be reacted by known methods to give covalent links (crosslinks) between separate molecules of the block polymer. Preferably the crosslinkable group is selected from organic groups including at least one substituted or unsubstituted ethenylene group (-CH=CH-), in particular vinyl groups or acrylate groups, and their crosslinking is promoted thermally, by ultra violet light (UV), or by a combination of thermal and UV energy. An acrylate group of the invention can be substituted or unsubstituted; suitable substituents in α- and/or β-position of the carboxylic acid group are selected from hydrogen atoms and usual organic radicals, in particular from hydrogen atoms and alkyl groups with less than 7 carbon atoms. Particularly preferred are unsubstituted acrylate groups (only hydrogen atoms as substituents) and α-methylacrylate groups.

The block polymers of the invention preferably have a mean molecular weight of from approximately 30,000 g/mol to approximately 400,000 g/mol, and in particular from approximately 40,000 g/mol to approximately 200,000 g/mol, and they may include polymeric and/or oligomeric and/or low-molecular weight ingredients, that are known to advantageously influence the desired properties of polymers, or that are necessary for a desired application. Therefore, blends of the block polymer of the invention with other polymers or with a different block polymer of the invention may be included in the shape memory polymer precursor of the invention. Depending on its composition, in particular depending on the polymeric segments of the block polymer of the invention, the precursor can, but need not itself have shape memory properties.

The block polymer according to the invention preferably is a polymer according to one of formulae **(I-A)** or **(I-B),** that can be obtained by one of the following reaction mechanisms **(A)** or **(B)**, wherein in reaction (A) a polyol **(II),** in particular an oligomeric diol (macrodiol) is reacted with a diisocyanate **(III),** that includes at least one crosslinkable group:

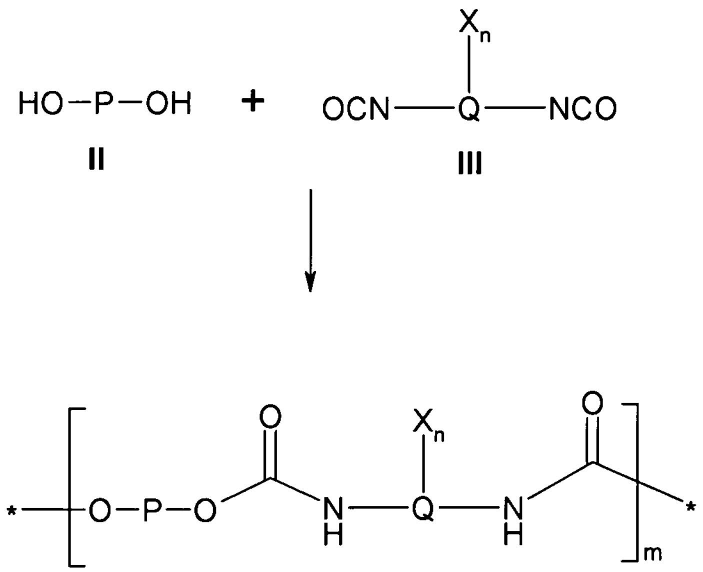

II III

Reaction (**A**),

**I-A**

wherein

P means an organic linking group, in particular an oligomer,
Q means an organic linking group, preferably of low molecular weight,
X means a crosslinkable group, preferably an acrylate group,
n is an integer of at least 1, preferably from 1 to 10, and particularly preferred from 2 to 6, and
m is an integer selected to obtain the desired molecular weight;

and wherein in reaction **(B)** a polyol **(II),** in particular an oligomeric diol (macrodiol) is reacted with i) a diisocyanate **(IV),** and ii) a diol **(V)**, that includes at least one crosslinkable group:

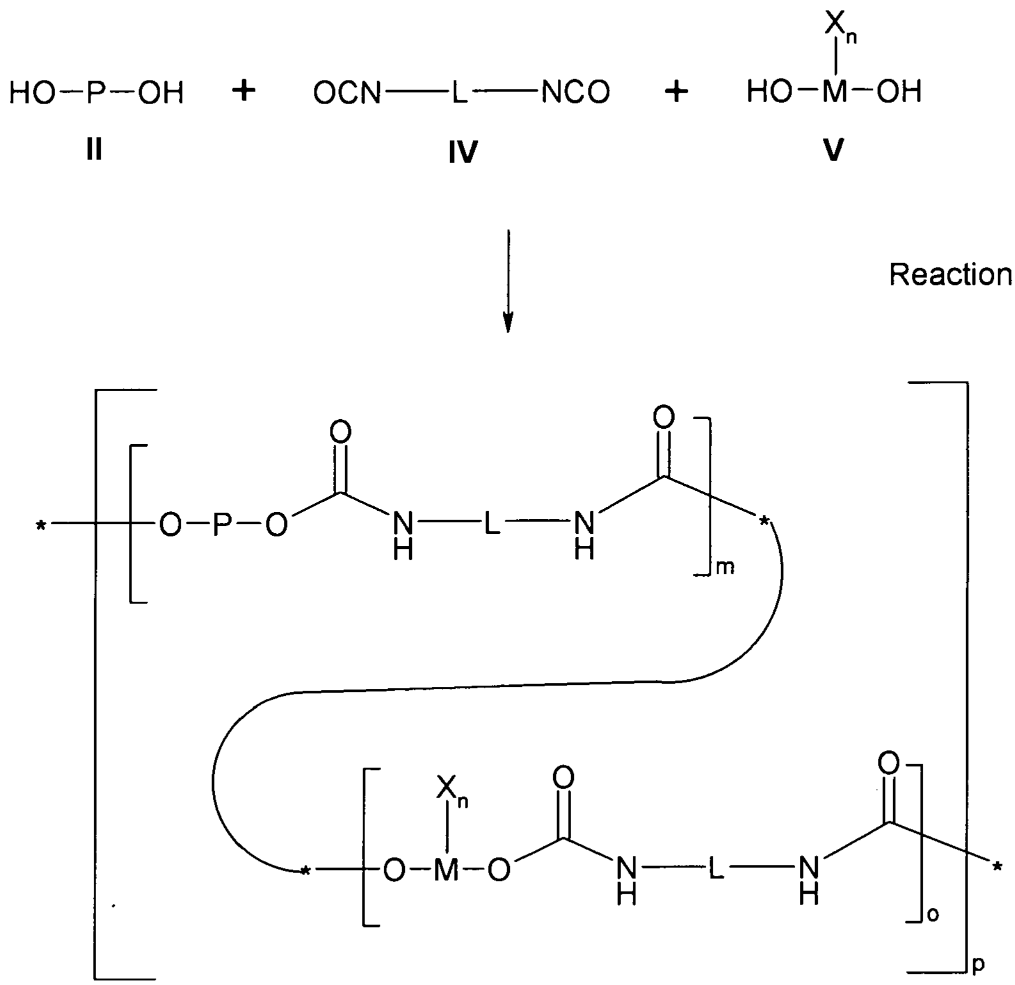

II IV V

Reaction (**B**),

**I-B**

wherein

- P means an organic linking group, in particular an oligomer,
- L means an organic linking group, preferably of low molecular weight,
- M means an organic linking group, preferably of low molecular weight,
- X means a crosslinkable group, preferably an acrylate group,
- n is 0 or an integer of at least 1, preferably from 1 to 4, and particularly preferred is 1,
- m, o, p mutually independently are integers of at least 1 selected to obtain the desired molecular weight, wherein m and o may vary in different repeating units, and

wherein in the case that n is 0, at least one of L and M, preferably M, includes at least one crosslinkable group, in particular a substituted or unsubstituted ethenylene group (-CH=CH-).

Organic linking groups of the invention can be oligomeric or of low molecular weight. Low molecular weight organic linking groups preferably have a molecular weight of less than approximately 1,000, in particular less then approximately 500, and particularly preferred less than approximately 300. They are understood to be organic radicals, that preferably are aliphatic, can be substituted or unsubstituted, and can include organic groups such as ether groups, acyl groups, ester groups, carbonyl groups, amide groups, carboxylic acid groups, urethane groups, unsaturated groups, amino groups, and the like.

In a preferred embodiment of the invention the following polyols of formula **(II)** can be used: polyester polyols, polyether polyols, polycarbonate polyols, polyester-polyether polyols, polycarbonate-polyester polyols, and polycarbonate-polyether polyols, wherein the polymers can be obtained by known synthetic procedures and can be homopolymers, copolymers and/or block copolymers. Such polyols preferably are oligomeric with a mean molecular weight of

from approximately 1,000 g/mol to approximately 20,000 g/mol, in particular from 2,000 g/mol to 10 000 g/mol.

The polyester polyols of formula **(II)** of the invention preferably are synthesized by ring opening polymerization of cyclic lactones, by polycondensation of polycarboxylic acid or carboxylic acid derivatives with polyhydroxy compounds, or by polycondensation of hydroxycarboxylic acids or polyhydroxy carboxylic acids.

Preferred examples of polyester polyols of formula **(II)** of the invention are poly(ε-caprolactone) diols (PCL); poly(ω-pentadecalactone) diols (PPDL); hydroxy terminated polyesters obtainable from dicarboxylic acids or dicarboxylic acid esters and diols, such as e.g. poly(1,6-hexamethylene adipate) diols, poly(1,6-hexamethylene sebacate) diols or poly(1,10-decamethylene sebacate) diols; poly(ε-caprolactone-co-glycolide) diols; poly(ε-caprolactone-co-lactide) diols; poly(ε-caprolactone-co-glycolide-co-lactide) diols; poly(lactide-co-glycolide) diols; poly(ε-caprolactone-co-ω-pentadecalactone) diols; poly(lactide)-poly(ε-caprolactone)-poly(lactide) ABA type block copolymer diols; poly(lactide-co-glycolide)-poly(ε-caprolactone)-poly(lactide-co-glycolide) A/A'-B-A/A' type block copolymer diols; and poly(ε-caprolactone)-poly(ω-pentadecalactone)-poly(ε-caprolactone) ABA type block copolymer diols.

As lactide units that may be included in the polyols of formula **(II)** of the invention preferably are used L,L- or D,L-dilactide units, and particularly preferred L,L-dilactide units. The dilactide and diglycolide units that may be included in the polyols of formula **(II)** preferably are obtained by ring opening polymerization of the corresponding dilactide and diglycolide rings. In polyols of formula **(II)** that are copolymers and include glycolic acid units, such monomeric units are preferably present in an amount of approximately 40 weight-% or less, in particular from approximately 0.5 to approximately 35 weight-%, with respect to all monomers present in the polyol.

The polyester polyols of formula **(II)** preferably are linear oligomers with a low-molecular weight diol in the middle of the polymer chain, polyester blocks of approximately the same length bond to each hydroxy group of said diol, and with terminal hydroxy groups. The polyester polyols can preferably be obtained by ring-opening polymerization of the appropriate lactone in the presence of a low-molecular weight diol that acts as the polymerization initiator. Said low-molecular weight diol preferably has a molecular weight of less then approximately 500, in particular less then approximately 200 g/mol. Examples for preferred low-molecular weight diols of the invention are substituted or unsubstituted aliphatic diols, in particular alkylene diols with 2 to 10 carbon atoms such as ethylene glycol, diethylene glycol, n-butane-1,4-diol, n-octane-1,8-diol, n-decane-1,10-diol, and 2,2-bis-(hydroxymethyl)-propionic acid (HMPA-diol).

Preferred examples of polyether polyols of formula **(II)** of the invention are polyethylene glycol (PEG), polypropylene glycol (PPG), poly-tetrahydrofurane (Poly-THF, pTHF), and block copolymers from PEG and PPG.

Preferred examples of polyester-polyether polyols of formula **(II)** of the invention are **ABA** block copolymer diols with terminal hydroxy groups, wherein "**A**" means poly(ε-caprolactone), poly(ω-pentadecalactone), poly(lactide), poly(glycolide), poly(ε-caprolactone-co-glycolide), poly(ε-caprolactone-co-lactide), poly(lactide-co-glycolide), poly(ε-caprolactone-co-pentadecalactone), poly(lactide-co-glycolide-co-caprolactone), and "B" means poly(ethylene glycol), polypropylene glycol, poly-tetrahydrofurane, or block copolymers from PEG and PPG.

Preferred examples of polycarbonate polyols (PC) of formula **(II)** of the invention are aliphatic polycarbonate diols (e.g., such Desmophen® compounds from Bayer); and cycloaliphatic polycarbonate diols.

A preferred example of polycarbonate-ester polyols of formula **(II)** of the invention are aliphatic polycarbonate diols (e.g., Desmophen® from Bayer), extended by polycondensation with dicarboxylic acid or dicarboxylic acid derivatives, such as sebacinic acid dibutylester.

Examples of particularly preferred diols of formula **(II)** are given in the following.

Oligomeric linear polyester diols:

PCL(DEG)-2k **(II-1),**

PCL(butan diol)-4k **(II-2),**

PCL-10k **(II-3),**

PCL(HMPA diol)-5k **(II-4) ,**

and

PPDL(butan diol)-3k **(II-5)**

wherein 2k, 3k, 4k, 5k and 10k mean a total molecular weight of approximately 2,000, 3,000, 4,000, 5,000 and 10,000 g/mol, respectively, and wherein the low-molecular weight diol used to initialize the polymerization reaction leading to the diols was diethylene glycol (DEG), 1,4-butan diol (butan diol), and 2,2-bis-(hydroxymethyl)-propionic acid (HMPA-diol) respectively; oligomeric PCL suitable for the invention is e.g. commercially available from Solvay under the trade name CAPA®;

PLGA(85/15; butan diol)-5k **(II-6),**

a poly(lactide-co-glycolide) diol with approximately 85 weight-% lactide acid units and approximately 15 weight-% glycolic acid units, 1,4-butane diol as low-molecular weight diol in the middle of the molecule, and a total molecular weight of approximately 5,000;

PCLGA(90/10; butan diol)-5k **(II-7),**

a poly(ε-caprolactone-co-glycolide) diol with approximately 90 weight-% ε-caprotactone units and approximately 10 weight-% glycolic acid units, 1,4-butane diol as low-molecular weight diol in the middle of the molecule, and a total molecular weight of approximately 5,000;

P-CL/GA/LA (10/34/56; butan diol)-5k **(II-8),**

a poly(ε-caprolactone-co-glycolide-co-D,L-lactide) diol with approximately 10 weight-% ε-caprolactone units, approximately 34 weight-% glycolic acid units, and approximately 56 weight-% lactide acid units; 1,4-butane diol as low-molecular weight diol in the middle of the molecule, and a total molecular weight of approximately 5,000 g/mol;

oligomeric polyether diol:

pTHF-2k **(II-9),**

a poly-tetrahydrofurane diol available from BASF with a molecular weight of approximately 2,000 g/mol.

oligomeric polyester-polyether diols:

PLGA(85/15)-PEG400-5k **(II-10),**

and

PLGA(85/15)-PEG600-5k **(II-11),**

a poly(lactide-co-glycolide)-poly(ethylene glycol)-poly(lactide-co-glycolide) with approximately 85 weight-% lactide acid units and approximately 15 weight-% glycolic acid units, a molecular weight of the poly(ethylene glycol) block of approximately 600 g/mol, and a total molecular weight of approximately 5,000 g/mol; and

oligomeric polycarbonate diol:

PC-2k **(II-12),**

available as Desmophen® C 2200 from Bayer, a linear aliphatic polycarbonate diol with terminal hydroxy groups and a molecular weight of approximately 2,000 g/mol.

The diisocyanates of formula **(III)** of the invention preferably are compounds of formulae **(III-A), (III-B)** and **(III-C),** that can be obtained as described in the following.

Compounds of formula **(III-A)** of the invention preferably can be obtained by the following reaction **(C)**:

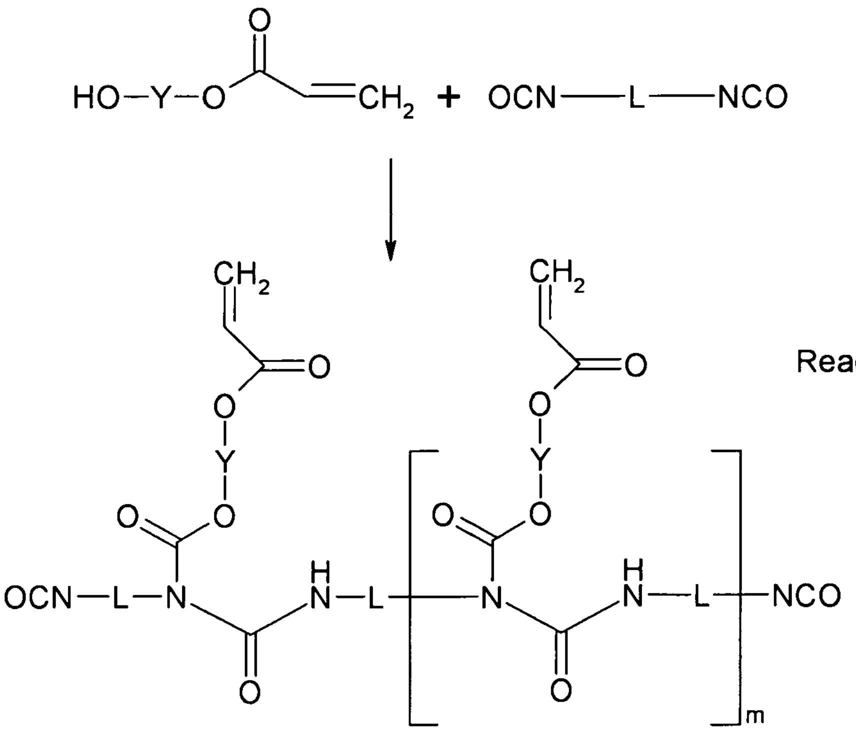

Reaction (**C**),

**III-A**

wherein

- Y means an organic linking group, preferably a substituted or unsubstituted alkyl group, and particularly preferred $-CH_2-CH_2-$,
- L means an organic linking group, preferably a substituted or unsubstituted alkyl group, and particularly preferred $-(CH_2)_6-$, and
- m is an integer selected to obtain the desired molecular weight, preferably from approximately 1 to approximately 10, in particular from approximately 1 to approximately 4,

and wherein the double bond of the acrylate groups is substituted or unsubstituted.

In a preferred embodiment of the invention the compounds of formula **(III-A)** are low viscous isocyanate functional, aliphatic acrylesters, wherein the lead structure is the allophanate group built up from hydroxyalkyl acrylate and hexamethylene diisocyanate (HDI). Such compounds have the advantage to combine two different (cross-)linking mechanisms in a single molecule and have been known as so called dual cure coating systems (light-, weather- and scratch-resistant lacquers).

A compound of formula **(III-A),** that is particularly preferred for the present invention is

Laromer® LR 9000 (Laromer) **(III-1),**

which is commercially available from BASF.

Compounds of formula **(III-B)** of the invention preferably are oligomeric materials, that can be obtained by reaction of a polyol, preferably a diol (V) including at least one crosslinkable group, preferably an acrylate group, and a diisocyanate **(IV)** (Reaction **(D)**):

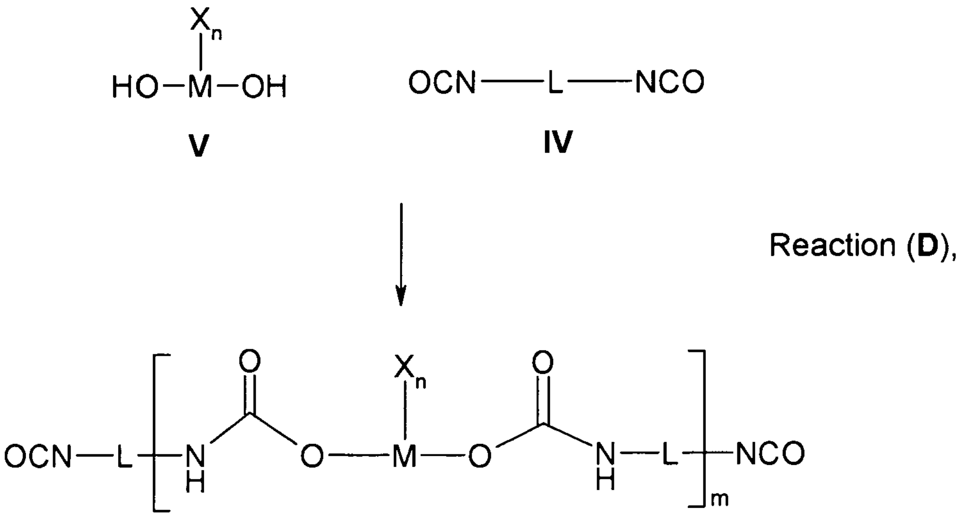

V IV

Reaction (D),

III-B

wherein L, M, and X have the same meaning as described above, n is an integer of at least 1, preferably from 1 to 4, and particularly preferred is 1, and m is selected to obtain the desired molecular weight.

Compounds of formula **(III-C)** of the invention preferably are oligomeric materials, that can be obtained by reaction of i) a diol **(II),** ii) a polyol, in particular a diol **(V)** including at least one acrylate group, and iii) a diisocyanate **(IV).** Contrary to reaction **(B)** described above, the reaction is stopped earlier and is directed by known means to get the oligomeric diisocyanate **(III-C)** (Reaction **(E)**):

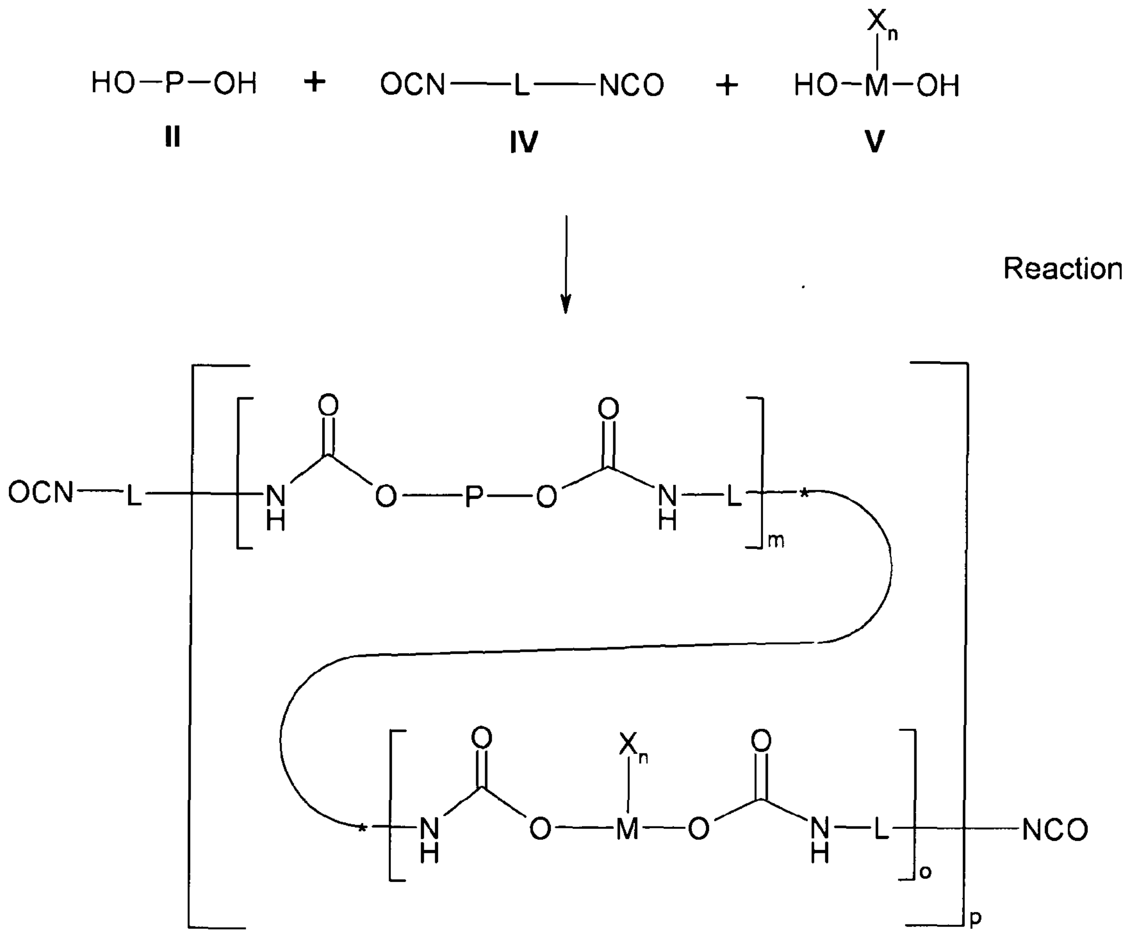

II IV V

Reaction (**E**),

**III-C**

wherein P, L, M, and X have the same meaning as described above, n is an integer of at least 1, preferably from 1 to 4, and particularly preferred is 1, and m, o, and p are integers of at least 1 and mutually independently are selected to obtain the desired molecular weight, and wherein m and o may vary in different repeating units.

The diisocyanates of formula **(IV)** of the invention may also be of formula **(III),** but preferably do not include a crosslinkable group. Particularly preferred diisocyanates of formula **(IV)** are low molecular weight compounds like hexamethylene diisocyanate, trimethyl hexamethylene diisocyanate, tolylene diisocyanate, isophorone diisocyanate and lysine diisocyanate, tolylene diisocyanate, 4,4'-diphenylmethane diisocyanate, xylylene diisocyanate, 4,4'-methylenebis (cyclohexylisocyanate), methylcyclohexane-2,4-diisocyanate, methylcyclohexane-2,6-diisocyanate, 1,3-(isocyanatemethyl) cyclohexane, and isophorone diisocyanate. The diisocyanate compounds may be used alone or in combination as a mixture of two or more of them.

For medical applications, polyisocyanates such as hexamethylene diisocyanate, trimethyl hexamethylene diisocyanate, isophorone diisocyanate and lysine diisocyanate are most preferred.

It is also possible to use diisocyanate prepolymers whose molecular weight is greater than approximately 500 g/mol, and in particular up to approximately 3,000 g/mol. These polyurethane prepolymers are prepared via known reactions of the abovementioned diisocyanates with low-molecular weight diols or macrodiols (e.g., with oligoether diols, oligoester diols or oligocarbonate diols with MW of from approximately 500 to approximately 3,000 g/mol).

In a preferred embodiment of the invention, the diol (V) includes at least one acrylate group as crosslinkable group. Preferred examples of this structure are shown in the following:

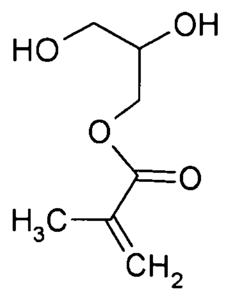

(V-1)

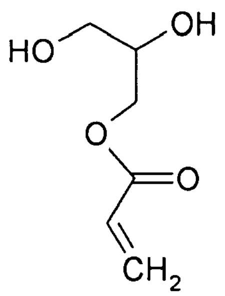

(V-2)

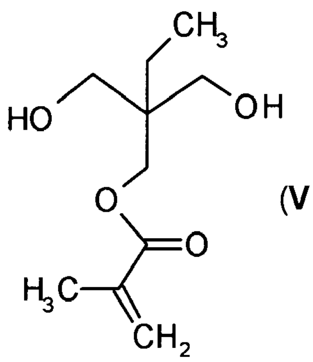

(V-3)

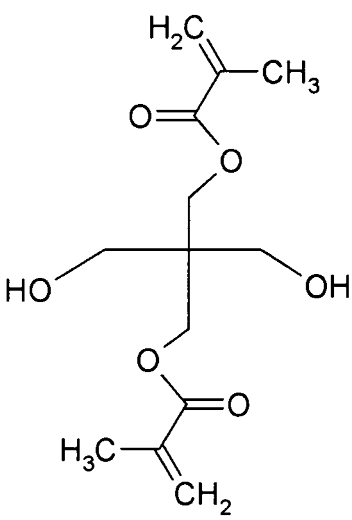

(V-4)

In another preferred embodiment of the invention, the diol (V) includes at least a crosslinkable group, that is not an acrylate group. Preferred examples of this structure are unsaturated diols, in particular alkene diols, that include an ethenylene group, examples of which are shown in the following:

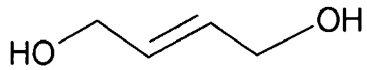

**(V-5)**,

and

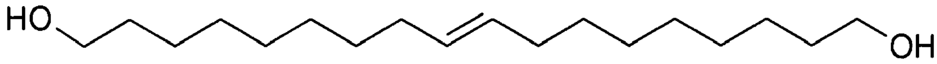

**(V-6)**.

As described above, the SMP precursor of the invention may include additional polymers besides the block polymer of the invention. Such additional polymers may be natural or synthetic. Polymers useful for the invention, including oligomers, can be linear or branched and may include side chains or any kind of dendritic structural elements. Examples of suitable additional polymers are described below.

The SMP networks of the invention also include interpenetrating networks (IPNs). In this embodiment of the invention the SMP network (e.g., component (A) of the IPN) is interpenetrated by at least one distinct additional polymeric component (e.g., component (B) of the IPN), that is not essentially chemically linked to component (A). This at least one additional polymeric component cannot be separated from the network by physical methods, and can itself be a polymer network, a SMP network, or a SMP network of the invention. Preferably the at least one additional component is itself not covalently crosslinked, neither with molecules of the own nature nor with component (A). Examples for suitable synthetic methods providing preferred IPNs of the invention are described in U.S. Patent No. 7,037,984, the disclosure of which is incorporated herein by reference. Examples of additional polymeric components suitable to produce a shape memory IPN of the invention are described below.

In addition the block polymer of the invention may include further polymeric blocks, that may be from natural or synthetic origin. Examples of suitable additional polymer blocks are described below.

Representative natural polymer blocks or polymers include proteins such as zein, modified zein, casein, gelatin, gluten, serum albumin, and collagen, and polysaccharides such as alginate, celluloses, dextrans, pullulane, and polyhyaluronic acid, as well as chitin, poly(3-hydroxyalkanoate)s, especially poly(β-hydroxybutyrate), poly(3-hydroxyoctanoate) and poly(3-hydroxyfatty acids).

Representative natural biodegradable polymer blocks or polymers include polysaccharides such as alginate, dextran, cellulose, collagen, and chemical derivatives thereof (substitutions, additions of chemical groups, for example, alkyl, alkylene, hydroxylations, oxidations, and other modifications routinely made by those skilled in the art), and proteins such as albumin, zein and copolymers and blends thereof, alone or in combination with synthetic polymers.

Representative synthetic polymer blocks or polymers include polyphosphazenes, poly(vinyl alcohols), polyamides, polyester amides, poly(amino acid)s, synthetic poly(amino acids), polyanhydrides, polycarbonates, polyacrylates, polyalkylenes, polyacrylamides, polyalkylene glycols, polyalkylene oxides, polyalkylene terephthalates, polyortho esters, polyvinyl ethers, polyvinyl esters, polyvinyl halides, polyvinylpyrrolidone, polyesters, polylactides, polyglycolides, polysiloxanes, polyurethanes and copolymers thereof. Examples of suitable polyacrylates include poly(methyl methacrylate), poly(ethyl methacrylate), poly(butyl methacrylate), poly(isobutyl methacrylate), poly(hexyl methacrylate), poly(isodecyl methacrylate), poly(1auryl methacrylate), poly(phenyl methacrylate), poly(methyl acrylate), poly(isopropyl acrylate), poly (isobutyl acrylate) and poly(octadecyl acrylate).

Synthetically modified natural polymers include cellulose derivatives such as alkyl celluloses, hydroxyalkyl celluloses, cellulose ethers, cellulose esters, nitrocelluloses, and chitosan. Examples of suitable cellulose derivatives include methyl cellulose, ethyl cellulose, hydroxypropyl cellulose, hydroxypropyl methyl cellulose, hydroxybutyl methyl cellulose, cellulose acetate, cellulose propionate, cellulose acetate butyrate, cellulose acetate phthalate, carboxymethyl cellulose, cellulose triacetate and cellulose sulfate sodium salt. These are collectively referred to herein as "celluloses."

The SMP precursor and the SMP networks of the invention can be biodegradable or non-biodegradable, although biodegradable polymer compositions often are preferred for *in vivo* medical applications. In general, these materials degrade by hydrolysis, by exposure to water or enzymes under physiological conditions, by surface erosion, by bulk erosion, or a combination thereof. Biodegradability can be achieved, if the polymer segments themselves include labile bonds, or if segments are linked via a biodegradable linkage, such as ester-, amide-, anhydride-, carbonate-, or

orthoester linkages, preferably urethane and ester linkages.

Even during their degradation the devices made from the SMP networks of the invention are mechanically stable over a long time, so that the supporting function of a medical device like a stent is no longer needed at the time its mechanical stability is impaired by the biodegradation.

As used herein, the term "biodegradable" refers to materials that are bioresorbable and/or degrade and/or break down by mechanical degradation upon interaction with a physiological environment into components that are metabolizable or excretable, over a period of time from minutes to five years, preferably less than three years, in particular less than one year, while maintaining the requisite structural integrity.

As used herein in reference to polymers, the term "degrade" refers to cleavage of the polymer chain, such that the molecular weight stays approximately constant at the oligomer level and particles of polymer remain following degradation. The term "completely degrade" refers to cleavage of the polymer at the molecular level such that there is essentially complete mass loss. The term "degrade" as used herein includes "completely degrade" unless otherwise indicated.

Biodegradable segments that are preferred in the context of the invention, are, for example, described in U.S. Patent No. 6,160,084, the disclosure of which is included herein by reference.

Representative synthetic degradable polymer segments include polyhydroxy acids, such as polylactides, polyglycolides and copolymers thereof; poly(ethylene terephthalate); polyanhydrides, poly(hydroxybutyric acid); poly(hydroxyvaleric acid); poly[lactide-co-(ε-caprolactone)]; poly[glycolide-co-(ε-caprolactone)]; polycarbonates, poly(pseudo amino acids); poly(aminoacids); poly(hydroxyalkanoate)s; polyanhydrides; polyortho esters; and blends and copolymers thereof. Polymers containing labile bonds, such as polyanhydrides and polyesters, are well known for their hydrolytic reactivity. Their hydrolytic degradation rates can generally be altered by simple changes in the polymer backbone and their sequence structure.

Non-biodegradable SMP networks, if used for medical applications, preferably do not include aromatic groups, other than those present in naturally occurring amino acids.

Various polymers, such as polyacetylene and polypyrrole, are conducting polymers. These materials are particularly preferred for uses in which electrical conductance is important. Examples of these uses include tissue engineering and any biomedical application where cell growth is to be stimulated. These materials may find particular utility in the field of computer science, as they are able to absorb heat without increasing in temperature better than SMAs. Conducting shape memory polymers are useful in the field of tissue engineering to stimulate the growth of tissue, for example nerve tissue.

Examples of non-biodegradable synthetic polymer segments include ethylene vinyl acetate, poly(meth)acrylic acid, polyamides, polyethylene, polypropylene, polystyrene, polyvinyl chloride, polyvinylphenol, and copolymers and mixtures thereof.

The polymers can be obtained from commercial sources or can be synthesized from monomers obtained from commercial sources, using standard techniques.

The SMP precursor of the invention itself can be used for applications where usual thermoplastic polymers or shape memory thermoplastic polymers are needed. Nevertheless, as the precursor includes reactive crosslinkable groups, it is preferred to crosslink the precursor to obtain the new shape memory polymer networks of the invention.

It has been found, that the SMP precursor of the invention can conveniently be processed using known methods to form thermoplastic polymers into shape, using known machines and tools; it can be blown, casted, extruded or injection molded in any desired shape to obtain three dimensional devices of high quality, that can be crosslinked to a high degree and thereby give three dimensional devices with superior mechanical and shape memory properties, with an exact form, reproducible dimensions and with a high mechanical long-term stability. In addition different processing methods and recasting can be combined, so that a tube or a filament is extruded in the first step, that thereafter is calibrated to a defined diameter and cutted into an appropriate length.

A particular advantage of the SMP precursor of the invention compared to known shape memory network precursors is the optimal compromise of fluidity and mechanical stability when processing the precursor of the invention and its elasticity and flexibility even before crosslinking. Known precursors suitable for shape memory polymer networks usually have a sufficient fluidity to be processed using common methods, but show an unsatisfactory mechanical stability during the processing and often are brittle before the crosslinking. Therefore it is difficult to produce a three-dimensional device from known precursors and to exactly maintain its form and dimensions from the moment of processing until it is crosslinked to fix its permanent form.

The SMP precursor of the invention has a sufficient mechanical stability at usual processing temperatures, so that a tube extruded therefrom maintains its original circular cross-section until it is crosslinked. To the contrary tubes from known precursors tend to deform before their permanent form is fixed. Despite their higher mechanical stability at processing temperatures, the SMP precursors of the invention have the additional advantage to be less brittle than the known ones, so that it is easier to handle the processed three dimensional devices of the invention without breaking them. This is particularly advantageous to separate an injection molded product from its mold.

Although the tools for processing of polymer network precursors are produced with extraordinary care, it cannot always be avoided, that they have irregularities (e.g., small scratches) that may be impressed to the produced three dimensional devices. Although very small faults that are thereby produced may not affect the function of the devices, their value might nevertheless be decreased, if the fault is visible. Much worse, such faults can weaken the devices to such an extend, that their function is no longer assured and the marred devices have to be discarded. It has been found that when using the SMP precursors of the invention such faults are less likely to occur.

The SMP precursor of the invention can also be shaped by other methods known to those of skill in the art for shaping solid objects, for example, laser ablation, micromachining, use of a hot wire, and by CAD/CAM (computer aided design/computer aided manufacture) processes. These processes are also preferred for shaping the SMP network polymers of the invention.

The crosslinking (curing) of the SMP precursor of the invention to obtain the SMP network of the invention is usually performed after the processing (forming into shape) and can be done by known methods suitable for the crosslinkable groups present in the shape memory polymer precursor of the invention. Preferably the crosslinking is promoted thermally, by ultra violet light (UV), or by a combination of thermal and UV energy, which usually result in three dimensionally crosslinked polymer networks.

To initiate the crosslinking reaction, the shape memory polymer precursor of the invention preferably includes crosslinking initiators, in particular heat (chemical) and/or light (photo) sensitive initiators. Preferably the initiators are used in an amount of approximately 0.1 to approximately 5 weight-%, in particular from approximately 0.1 to approximately 1.5 weight-%, and particularly preferred from approximately 0.1 to approximately 0.5 weight-%. In a preferred embodiment of the invention photoinitiators are used, in particular Esacure® KIP 150 (oligo-[2-hydroxy-2-methyl-1-[4-(1-methylvinyl) phenyl] propanone) from Lamberti; a 1 : 1 mixture of D,L-champhorquinone (2,3-bornandion) and ethyl-2-dimethylaminobenzoate; Lucirin® TPO; Lucirin® TPO-L; Darocur® 1173; Irgacure® 184; Irgacure® 500; Esacure® KIP 100 F; and benzophenone.

The crosslinking reaction is most efficient, if performed in the melt and under exclusion of oxygen, and for the photocrosslinking with UV energy the materials of the invention are irradiated with actinic radiation having a wavelength of preferably from approximately 320 to approximately 500 nm. The reaction conditions can be optimized by a person skilled in the art by usual experimental techniques.

Although the crosslinking is usually done in the melt, it has been found, that the shape memory precursor of the invention can also be crosslinked at temperatures that are low enough for the polymer to be sufficiently mechanically stable under the applied temperature, so that, for example, hollow three dimensional articles made therefrom can be crosslinked successfully.

During the crosslinking step, the SMP precursor of the invention preferably is almost free from solvents, but the crosslinking can also be performed in the presence of one or more solvent(s). In this case, the solvent(s) preferably is(are) removed from the formed gel in a subsequent step. After the crosslinking step, and where necessary, the removal of the solvent(s) the shape memory polymer network of the invention is obtained in its permanent form.

The shape memory network polymers of the invention are able to store at least one form (shape) in memory, so that they can be programmed into a stable temporary form and switched back by a stimulus like a temperature increase, to their memorized (permanent) form. The permanent form is defined therein by the two- and in particular three-dimensionally crosslinked network structure. The at least one temporary form is defined by polymer segments, that reversibly stabilize said form as known in the art, so that the permanent form is only recovered after application of an appropriate stimulus.

Stimuli causing shape change preferably can be temperature, ionic change, pH, light, electric field, magnetic field or ultrasound. Particularly preferred is a temperature increase as stimulus.

When an SMP network of the invention is cooled below the melting point or glass transition temperature of the soft segment while the shape is deformed with respect to the permanent shape, that (temporary) shape is fixed. The original shape is recovered by heating the material above the melting point or glass transition temperature of the soft segment but below the melting point or glass transition temperature of the hard segment.

In another method for setting a temporary shape, the material is deformed at a temperature lower than the melting point or glass transition temperature of the soft segment, resulting in stress and strain being absorbed by the soft segment. When the material is heated above the melting point or glass transition temperature of the soft segment, but below the melting point (or glass transition temperature) of the hard segment, the stresses and strains are relieved and the material returns to its original shape.

The shape memory polymer network of the invention and the articles made therefrom are preferably programmed in that they are in the following order i) heated to a temperature that is above the transition temperature of at least one of its soft segments, but below the decomposition temperature of the article, ii) formed into an arbitrary shape, and fixed in this shape until iii) the temperature has been reduced below said transition temperature.

A certain amount of energy needs to be transferred to the shape memory polymer in order to recover a memorized shape. For the thermal shape memory effect, the amount of energy required to fully recover a memorized shape depends

on the heat capacity of the material. For light sensitive materials, however, the amount of energy depends on the dosage of irradiation. In a preferred embodiment of a thermal shape memory effect, the polymer has a sharp thermal transition, which is triggered based on the duration the material is exposed to a temperature greater than $T_{trans}$.

Other factors affecting the transition include the mass or size of the material, and the temperature and heat transfer coefficient of the medium or environment in contact with (and used to heat) the material. For example, the higher the temperature of the environment, the more quickly the memorized shape is recovered.

Several physical properties of SMPs other than the ability to memorize shape are significantly altered in response to external changes in temperature and stress, particularly at the melting point or glass transition temperature of the soft segment. These properties include the elastic modulus, hardness, flexibility, vapor permeability, damping, index of refraction, and dielectric constant. The elastic modulus (the ratio of the stress in a body to the corresponding strain) of an SMP can change by a factor of up to 200 when heated above the melting point or glass transition temperature of the soft segment. Also, the hardness of the material changes dramatically when the soft segment is at or above its melting point or glass transition temperature. When the material is heated to a temperature above the melting point or glass transition temperature of the soft segment, the damping ability can be up to five times higher than a conventional rubber product.

A particular advantage of the SMP networks of the invention is, that they show little to no tendency of loosing there mechanical stability, neither in their permanent nor in their programmed form(s). Consequently, for example, an implanted tubular device (a stent) will be stable and maintain its diameter over a long period of time and therefore hold open a blood vessel at a constant diameter. In other words, such an implanted device will show little to no recoil.

In a preferred embodiment of the invention the shape memory polymer networks have a gel content of approximately 60% or higher, in particular of approximately 80% or higher, and especially preferred of approximately 90% and higher.

Complex and exactly reproducible shape changes, that offer a very high usability, and which should not be mistaken for simple shrinking or swelling effects, are only available if the SMP has high values for shape recovery and shape fixity. This is ensured by the SMP networks of the invention, that can readily recover to their original molded shape following numerous thermal cycles, and that preferably have a shape recovery of approximately 50% or higher, in particular of approximately 80% or higher, and especially preferred of approximately 90% and higher, and a shape fixity of approximately 85% or higher, in particular of approximately 90% or higher, and especially preferred of approximately 95% and higher.

In a preferred embodiment of the invention, the degree of crystallinity of the polymer or segments thereof is between approximately 3% and approximately 80%, more preferably between approximately 3% and approximately 60%.

In another preferred embodiment of the invention, the shape memory polymer networks are able to store at least two forms (shapes) in memory (e.g., 2, 3, 4 or even more than 4 forms). Shape memory network polymers with two forms in memory are also called triple shape memory polymers. In the invention, the different temporary shapes, hence all shapes apart from the permanent shape defined by the covalent network, are stabilized by different polymer segments. Said segments preferably each are present at a ratio of at least approximately 5 weight-% (wt-%), preferably of at least approximately 20 wt-%, with regard to the total mass of the polymer network of the invention, to achieve a strong shape memory effect.

The different segments responsible for the possibility to store more than one form in memory, can all be part of the block polymer of the invention, provided that the organic linking groups included therein and the polymerization grades are selected to provide suitable segments.

Alternatively, at least two different crosslinkable polymers can be blended in the SMP precursor of the invention, wherein at least one of the polymers is a block polymer of the invention. After the crosslinking step, shape memory polymer networks with more than one form in memory can be obtained, if the segments provided by the different polymers are suitably selected.

A further possibility is to blend at least a block polymer of the invention with a suitable non-crosslinkable thermoplastic polymer, that predominantly is not covalently linked to the network structure during the crosslinking step, so that an interpenetrating network with more than one shape in memory is obtained, if the segments provided by the different polymers are suitably selected.

Said segments, that are suitable to obtain a shape memory polymer composition being able to hold more than one shape in memory, have to differ sufficiently in their response to a stimulus, so that their form change can be triggered selectively. For example, the composition can include besides the network structure that defines the permanent shape a hard segment and at least one soft segment, wherein the $T_{trans}$ of the hard segment is between approximately -30° C and approximately 270° C, and is at least approximately 10° C, and preferably at least approximately 20° C, higher than the $T_{trans}$ of one of the soft segments, and the $T_{trans}$ of each subsequent soft segment is at least approximately 10° C, and preferably approximately 20° C, lower than the $T_{trans}$ of the preceding soft segment.

In another embodiment of the invention, at least two of said segments, that are suitable to obtain a shape memory polymer composition being able to hold more than one shape in memory, are responsive to different stimuli,

so that their form change can be triggered independently by each of the stimuli. In this embodiment one of the segments ("the first segment") may be responsive to temperature, ionic change, pH, light, electric field, magnetic field or ultrasound and another segment may be responsive to a stimulus taken from the same group, but being different to that of the first segment. In this embodiment, it is preferred that at least one of the segments is responsive to an increase in temperature.

The invention is also related to articles including an SMP network of the invention, wherein said articles include at least a part that has been formed from the SMP precursor of the invention and thereafter has been crosslinked as described above. In a preferred embodiment of the invention, such articles at least partially enclose a hollow space, and an example of such an article is a tubular device.

Any of a variety of therapeutic, prophylactic and/or diagnostic agents can be incorporated within the polymer compositions of the invention, and articles made therefrom can also be provided with coatings that include such agents, so that the compositions and articles of the invention can locally or systemically deliver the incorporated agents following administration to a patient. Examples include synthetic inorganic and organic compounds or molecules, proteins and peptides, polysaccharides and other sugars, lipids, and nucleic acid molecules having therapeutic, prophylactic or diagnostic activities. Nucleic acid molecules include genes, plasmid DNA, naked DNA, antisense molecules which bind to complementary DNA to inhibit transcription, ribozymes and ribozyme guide sequences. The agents to be incorporated can have a variety of biological activities, such as vasoactive agents, neuroactive agents, hormones, growth factors, cytokines, anaesthetics, steroids, anticoagulants, antiinflammatories, immunomodulating agents, cytotoxic agents, prophylactic agents, antibiotics, antivirals, antisense, antigens, and antibodies. In some instances, the proteins may be antibodies or antigens which otherwise would have to be administered by injection to elicit an appropriate response. Proteins are defined as including 100 amino acid residues or more; peptides are less than 100 amino acid residues. Unless otherwise stated, the term protein refers to both proteins and peptides. Polysaccharides, such as heparin, can also be administered. Compounds with a wide range of molecular weight, for example, between 10 and 500,000 grams per mole, can be encapsulated.

Imaging agents which may be utilized for the articles of the invention include commercially available agents used in positron emission tomography (PET), computer assisted tomography (CAT), single photon emission computerized tomography, x-ray, fluoroscopy, magnetic resonance imaging (MRI), and ultrasound agents.

The polymer compositions of the invention, and articles made therefrom, can be used to prepare articles of manufacture for use in biomedical applications. For example, sutures, orthodontic materials, bone screws, nails, plates, catheters, tubes, films, stents, PFO devices, orthopedic braces, splints, tape for preparing casts, and scaffolds for tissue engineering, contact lenses, drug delivery devices, implants, and thermal indicators, can be prepared.

The polymer compositions of the invention, and articles made therefrom, can be formed into the shape of an implant which can be implanted within the body to serve a mechanical function. Examples of such implants include rods, pins, screws, plates and anatomical shapes.

The polymer compositions of the invention, and articles made therefrom, can be combined with fillers, reinforcement materials, radioimaging materials, excipients or other materials as needed for a particular implant application. Examples of fillers include calcium-sodium-metaphosphate which is described in U.S. Patent No. 5,108, 755, the disclosure of which is incorporated herein by reference. Those of skill in the art can readily determine a suitable amount of these materials to include in the compositions.

Examples of non-medical type applications for polymer compositions of the invention, and articles made therefrom, include items for which disposal is an issue, such as disposable diapers and packaging materials, self healing plastic parts(e.g., suitable in the automotive industry, switches, sensors, and locking systems). The materials of the invention can also facilitate the assembly or disassembly of devices(e.g., the fixation of glasses in spectacles or the opening or disintegration of a case for easy recycling of its components).

Certain articles of the invention are designed to hold their intended shape unless acted upon in a manner inconsistent with their normal use. For example, a car bumper will hold its intended shape unless it has been impacted. These articles are to be used in their intended shape and repaired, for example, by application of heat, once they are damaged.

Other articles of manufacture are designed to be used such that the first shape is intended for an initial use, and a second shape is intended for a subsequent use. Examples of these include biomedical devices which can form a second shape upon reaching at body temperature, or upon application of an external stimulus which heats the device above body temperature.

Still other articles of manufacture are designed to be used such that their shape changes in reaction to, or adjustment to, changes in temperature, such as thermosensers in medical devices.

As becomes clear from the broad variety of articles that can advantageously be prepared from the SMP network polymers of the invention, there is a wide range of applications and uses for such articles.

It will be apparent to those skilled in the art that various modifications and variations can be made in the present invention and specific examples provided herein without departing from the spirit or scope of the invention. Thus, it is intended that the present invention covers the modifications and variations of this invention that come within the scope

of any claims and their equivalents.

The following examples are for illustrative purposes only and are not intended, nor should they be interpreted to, limit the scope of the invention.

## EXAMPLES

**Example 1**

**Synthesis of the Thermoplastic Polymer**

In a vacuum dried round-bottom flask was added 200 g of the diol according to table 1 to 3 or 100 g of each of the diols according to table 4 under an argon atmosphere at room temperature. During the complete reaction as described in the following the argon atmosphere was preserved. After heating to a temperature of approximately 70° C were added 750 mL of the solvent dichloroethane and it was stirred for approximately 0.5 hours until a solution was obtained. After addition of approximately 750 ppm 4-methoxyphenol (with respect to the total weight of the diol(s)) the mixture was stirred again for approximately 0.5 hours and then Laromer® LR 9000 (Laromer) from BASF **(III-1)** was added. The weight of Laromer was calculated by the formula:

Weight of Laromer = 0.075 x OH-number of the diol(s) x weight of the diol(s) / NCO-number of Laromer.

Thereafter, it was further stirred for approximately 0.5 hours at approximately 70° C under argon atmosphere. If within this time no significant reaction could be observed (no viscosity increase and constant NCO-absorption in the IR spectrum at 2270 $cm^{-1}$), then 50 ppm Sn as dibutyl tin dilaurate (available from Sigma-Aldrich) were added to start the reaction. The reaction mixture was stirred at 70° C for approximately 1 to 4 hours under argon atmosphere until the absorption of the reactive isocyanate could no longer be detected by FTIR at 2270 $cm^{-1}$. Thereafter, 10 mL ethanol were added to finally stop the reaction and the solvent was removed using a vacuum dryer at room temperature. The molecular weight of the thermoplastic polymers measured by gel permeation chromatography as described below was between approximately 60,000 to approximately 80,000 g/mol.

**Table 1. Thermoplastic Block Polymers of the Invention Synthesized from Polyester Polyols**

| Material | Diol |
|---|---|
| **I-A-1** | PCL(DEG)-2k (CAPA® 2205 from Solvay) **(II-1)** |
| **I-A-2** | PCL(butan diol)-4k (CAPA® 2402 from Solvay) **(II-2)** |
| **I-A-3** | PCL-10k (CAPA® 6100 from Solvay) **(II-3)** |
| **I-A-4** | PCL(HMPA diol)-5k **(II-4)** |
| **I-A-5** | PPDL(butan diol)-3k **(II-5)** |
| **I-A-6** | PLGA(85/15; butan diol)-5k **(II-6)** |
| **I-A-7** | PCLGA(90/10; butan diol)-5k **(II-7)** |
| **I-A-8** | P-CL/GA/LA (10/34/56; butan diol)-5k **(II-8)** |

**Table 2. Thermoplastic Block Polymers of the Invention Synthesized from Polyester-polyether Polyols**

| Material | Diol |
|---|---|
| **I-A-9** | PLGA(85/15)-PEG400-5k **(II-10)** |
| **I-A-10** | PLGA(85/15)-PEG600-5k **(II-11)** |

**Table 3. Thermoplastic Block Polymers of the Invention Synthesized from Polycarbonate Polyol**

| Material | Diol |
|---|---|
| **I-A-11** | PC-2k (Desmophen® C 2200 from Bayer) **(II-12)** |

**Table 4. Thermoplastic Block Polymers of the Invention Including Two Different Diols**

| Material | Diol 1 | Diol 2 |
|---|---|---|
| **I-A-12** | **(II-1**) | **(II-5)** |
| **I-A-13** | **(II-2)** | **(II-5)** |
| **I-A-14** | **(II-3)** | **(II-5)** |
| **I-A-15** | **(II-1)** | pTHF-2k (from BASF) **(II-9)** |

**Crosslinking of the Thermoplastic Polymers to Networks**

The crosslinkable thermoplasts of the invention were compounded with 0.2 weight-% of the photoinitiator Esacure KIP 150 (Oligo-[2-hydroxy-2-methyl-1-[4-(1-methylvinyl) phenyl]-propanone), and evacuated at elevated temperatures to remove oxygen from the material. Thereafter, the composition is irradiated between glass plates at a thickness of 0.5 mm with an EXFO, Omnicure 2000 UV lamp until the crosslinking is completed. In the following the shape memory polymer networks obtained from a specific thermoplastic material are identified by the code of the respective thermoplastic material supplemented by "**NW**." As an example, the network obtained from **I-A-1** is identified as **"I-A-1 NZ."**

**Characterization of the Materials**

The molecular weights of the polymeric materials were determined by gel permeation chromatography (GPC) using standard procedures. THF was used as eluent and polystyrene, Triple SEC as a standard. $M_n$ means the number-average molar mass and $M_w$ the weight-average molar mass. If not explicitly specified, then the molar mass (molecular weight) is given as $M_n$ value.

The thermal properties of polymers were evaluated by differential scanning calorimetry (DSC) with a Mettle Toledo DSC 822 equipment using 5 to 10 mg of material and heating between -100 to 150° C with a heating rate of 10 K / minute and a cooling rate of 10 K / minute. Two scans were recorded and the data were taken from the second heating scan. The peak related to a shape transition had a certain temperature range, that was analyzed by measuring the temperature, at which the transition begins (**Peak(1,2) Tm, onset**), the temperature at the maximum of the peak (**Peak(1,2) Tm, peak**), and the temperature at which the transition is completed (**Peak(1,2) Tm, end**). Tm, onset was obtained mathematically from the measurement at the point, at which the tangent through the inflection point at the low-temperature side of the peak subtends the straight line best fitted to be the baseline underlying the peak. In cases where no single inflection point could be indentified, but a region with an approximately constant gradient, a straight line through said region was used instead of the tangent. **Tm, end** is obtained accordingly at the high temperature side of the peak.

Fourier transform infrared spectra (FTIR spectra) were run with a Scimitar FTS 2000 Series equipment having an ATR-crystal ZnSe, DTGS-detector. 32 scans were run to measure the background and also 32 scans for the sample.

The gel content of polymer networks was determined after extraction at room temperature (room temperature as used herein generally refers to a temperature in the range of 20 to 25°C, typically 23°C if not otherwise stated)in chloroform for 2 hours and drying the gels in vacuum until constant weight. The gel content was calculated according to the formula

$$\text{Gel Content (\%)} = 100 \times m_1 / m_2,$$

wherein $m_1$ is the weight of the insoluble part after extraction and drying, and $m_2$ is the weight before extraction.

The shape memory behavior was determined quantitatively by cyclic thermo mechanical measurements performed on a Zwick Z005 equipped with a thermo chamber. Strain recovery rate (Rr, %) and strain fixity rate (Rf, %) were determined in one cycle. The temperature gradient (dT/dt) was 1° C/minute).

Cyclic thermomechanical measurements at room temperature were done to determine the tensile strength, E-modulus and elongation at break values of the (non-extracted) polymer network films cut to DIN EN ISO 527-2 / 1 BB specifications. A Zwick Z005 tensile tester equipped with a thermo chamber at a speed of 10 mm/minute using a 1 kN

force sensor (DIN EN ISO 527-2 / 1 BB 10) was used for this purpose.

**Table 5. Thermal Characterization of Shape Memory Networks with a Single Diol**

| Material | Peak 1 Tm onset °C | Peak 1 Tm, peak °C | Peak 1 Tm, end °C |
|---|---|---|---|
| **I-A-2 NW** | 36 | 44 | 50 |
| **I-A-3 NW** | 50 | 55 | 61 |
| **I-A-4 NW** | 46 | 53 | 59 |
| **I-A-5 NW** | 70 | 79 | 84 |
| **I-A-7 NW** | 23 | 31 | 34 |
| **I-A-11** NW | 27 | 38 | 44 |

If more than one sample of the same composition was prepared, then the average values of the measured temperatures are shown in table 5.

**Table 6. Thermal Characterization of Shape Memory Networks with Two Different Diols**

| Material | Peak 1 Tm, onset °C | Peak 1 Tm, peak °C | Peak 1 Tm, end °C | T Reversal point °C | Peak 2 Tm, onset °C | Peak 2 Tm, peak °C | Peak 2 Tm, end °C |
|---|---|---|---|---|---|---|---|
| **I-A-12 NW** | 15 | 39 | 48 | 53 | 76 | 88 | 94 |
| **I-A-13 NW** | 29 | 46 | 54 | 57 | 71 | 82 | 87 |
| **I-A-14 NW** | 31 | 43 | 50 | 53 | 73 | 80 | 85 |

If more than one sample of the same composition was prepared, then the average values of the measured temperatures are shown in table 6.

**Table 7. Gel Contents**

| Material | Gel Content (%) |
|---|---|
| **I-A-1 NW** | 96 |
| **I-A-2 NW** | 89 |
| **I-A-3 NW** | 92 |
| **I-A-4 NW** | 89 |
| **I-A-5 NW** | 60 |
| **I-A-6 NW** | 90 |
| **I-A-10 NW** | 91 |
| **I-A-13 NW** | 95 |
| **I-A-14 NW** | 97 |

If more than one sample of the same composition was prepared, then the average value of the measured gel contents is shown in table 7.

**Table 8. Shape Memory Behavior**

| Material | Shape Fixity (%) | Shape Recovery (%) |
|---|---|---|
| **I-A-2 NW** | 99 | 93 |
| **I-A-3 NW** | 100 | 93 |
| **1-A-4 NW** | 99 | 92 |

(continued)

| Material | Shape Fixity (%) | Shape Recovery (%) |
|---|---|---|
| **I-A-5 NW** | 96* | 96* |
| **I-A-6 NW** | 100 | 85 |
| **I-A-7 NW** | 100 | 88 |
| **I-A-10 NW** | 99 | 100 |

In Table 8, those values marked "*" were obtained from cycles with a maximal elongation of 50%, whereas the remaining values were obtained from cycles with a maximal elongation of 100%.

If more than one sample of the same composition was prepared, then the average values of the measured shape memory behavior are shown in table 8.

The SME of the triple shape materials **I-A-12 NW** to **I-A-14 NW** was tested by programming three dimensional devices with two shapes in memory. It was observed that the first temporary and the permanent shape could be recovered by a stepwise temperature increase. Thereby an efficient triple shape behavior of the materials was observed.

**Table 9. Tensile Strength, E-modulus and Elongation at Break Values**

| Material | Young's modulus ($E_t$) MPa | Elongation at break ($\varepsilon_b$) % | Tensile strength ($\sigma_b$) MPa |
|---|---|---|---|
| **I-A-2 NW** | 217 | 162 | 21 |
| **I-A-3 NW** | 262 | 416 | 34 |
| I**-A-4 NW** | 296 | 259 | 28 |
| **I-A-5 NW** | 423 | 176 | 25 |
| **I-A-6 NW** | 2307 | 167 | 37 |
| **I-A-10 NW** | 552 | 217 | 45 |
| **I-A-14 NW** | 221 | 213 | 36 |

**Discussion of Results**

The SMP networks of the invention have been found to have comparable or better properties compared to known SMP (e.g., against the SMP networks described in WO2007/096708).

A particular advantage of the materials of the invention is their improved flexibility in the SMP precursor as well as in the network stage. Therefore, the materials of the invention have been found to be a highly useful alternative of known SMP networks.

The materials of the invention, that include PEG derivatives (e.g., **I-A-9** and **I-A-10**) have been found to be particularly suitable for the use in conventional processing methods, as they have the additional advantages of a higher flexibility after the crosslinking, and a faster degradation rate.

Although the invention has been described and illustrated with a certain degree of particularity, it is understood that the present disclosure has been made only by way of example, and that numerous changes in the conditions and order of steps can be resorted to by those skilled in the art without departing from the spirit and scope of the invention.

## Claims

1. Shape memory polymer precursor, that is a thermoplastic composition, and comprises at least one block polymer comprising at least polymer blocks originating from an oligomeric diol, that are linked by a diisocyanate, wherein the block polymer optionally comprises an additional unit also linked by the diisocyanate, **characterized in that** the diisocyanate, and/or the additional unit comprise(s) at least one crosslinkable group, and that the precursor can be crosslinked to obtain a shape memory polymer network.

2. Shape memory polymer precursor according to Claim 1, further **characterized in that** the additional covalently linked unit originates from a low-molecular weight diol or an oligomeric diol.

**3.** Shape memory polymer precursor according to any of the preceding claims, further **characterized in that** the crosslinkable group is selected from organic groups comprising at least one substituted or unsubstituted ethenylene group (-CH=CH-).

**4.** Shape memory polymer precursor according to claim 3, further **characterized in that** the crosslinkable group is selected from vinyl groups, substituted or unsubstituted acrylate groups.

**5.** Shape memory polymer precursor according to any of the preceding claims, further **characterized in that** it additionally comprises polymeric and/or oligomeric and/or low-molecular weight ingredients, that are known to advantageously influence the desired properties of polymers, or that are necessary for a desired application.

**6.** Method for forming a shape memory polymer precursor, **characterized in that** the shape memory polymer precursor according to any of claims 1 to 5 is processed by conventional methods known to form thermoplastic polymers into shape.

**7.** Method for the production of a shape memory polymer network, **characterized in that** the shape memory polymer precursor according to any of claims 1 to 5 is crosslinked.

**8.** Method according to claim 7, further **characterized, in that** UV radiation and/or thermal energy is used for the crosslinking.

**9.** Method according to any of claims 7 or 8, further **characterized in that** the crosslinking is performed at temperatures low enough, that the polymer is mechanically stable under the applied temperatures.

**10.** Shape memory polymer network, **characterized in that** it is obtainable by the method according to any of claims 7 to 9.

**11.** Shape memory polymer network according to claim 10, further **characterized, in that** it has at least one shape in memory.

**12.** Method for forming a shape memory polymer network article, **characterized in that** after execution of the method according to claim 6, the method according to any of claims 7 to 9 is executed.

**13.** Shape memory polymer network article, **characterized in that** it comprises a shape memory polymer network according to any of claims 10 or 11.

**14.** Shape memory polymer network article according to claim 13, further **characterized in that** it can be produced according to the method of claim 12.

**15.** Shape memory polymer network article according to any of claims 13 or 14, further **characterized in that** it at least partially encloses a hollow space.

**16.** Shape memory polymer network article according to any of claims 13 to 15, further **characterized in that** it is selected from sutures, orthodontic materials, bone screws, rods, pins, screws in general, nails, plates, catheters, tubes, films, stents, PFO devices, orthopedic braces, splints, tape for preparing casts, and scaffolds for tissue engineering, contact lenses, drug delivery devices, implants, diapers, packaging materials, automobile parts, switches, sensors, locking systems, spectacles, recyclable or reusable products, and thermal indicators.

**17.** Method of programming a shape memory polymer network article, **characterized in that** the shape memory polymer network article according to any of claims 13 to 16 is in the following order i) heated to a temperature that is above the transition temperature of at least one of its soft segments, but below the decomposition temperature of the article, ii) formed into an arbitrary shape, and fixed in this shape until iii) the temperature has been reduced below said transition temperature.

**18.** Shape memory polymer network article according to any of claims 13 to 16, further **characterized in that** it has at least one shape in memory.

**19.** Shape memory polymer network article according to claim 18, further **characterized in that** it can be obtained by

the method of claim 17.

**20.** USE OF THE SHAPE MEMORY POLYMER NETWORK ARTICLE ACCORDING TO ANY OF CLAIMS 13 TO 16, 18 OR 19.

European Patent Office

# EUROPEAN SEARCH REPORT

Application Number
EP 07 02 5210

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 801 140 A (MNEMOSCIENCE GMBH [DE]) 27 June 2007 (2007-06-27) * paragraphs [0021] - [0024], [0027] - [0030], [0048] - [0050], [0056] * * claims 1,4-6 * ----- | 1-20 | INV. C08G18/67 C08G18/81 |
| X | EP 1 362 872 A (MNEMOSCIENCE GMBH [DE]) 19 November 2003 (2003-11-19) * paragraphs [0030] - [0035] * * claims 1,3,7,9 * ----- | 1,2 | |
| X | MIN C ET AL: "BIODEGRADABLE SHAPE-MEMORY POLYMER-POLYLACTIDE-CO-POLY(GLYCOLIDE-CO-CAPROLACTONE) MULTIBLOCK COPOLYMER" 1 August 2005 (2005-08-01), POLYMERS FOR ADVANCED TECHNOLOGIES, WILEY & SONS, BOGNOR REGIS, GB, PAGE(S) 608 - 615 , XP001239616 ISSN: 1042-7147 * page 610, right-hand column - page 611, right-hand column * ----- | 1,2 | TECHNICAL FIELDS SEARCHED (IPC) |
| A | BYUNG K K ET AL: "Polyurethanes having shape memory effects" 1 January 1996 (1996-01-01), POLYMER, ELSEVIER SCIENCE PUBLISHERS B.V, GB, PAGE(S) 5781 - 5793 , XP004070893 ISSN: 0032-3861 * the whole document * ----- | 1-20 | C08G |

The present search report has been drawn up for all claims

1

| Place of search | Date of completion of the search | Examiner |
|---|---|---|
| Munich | 13 May 2008 | Heidenhain, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT ON EUROPEAN PATENT APPLICATION NO.** EP 07 02 5210

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2008

| Patent document cited in search report | Publication date | Patent family member(s) | Publication date |
|---|---|---|---|
| EP 1801140 A | 27-06-2007 | WO 2007096708 A2 | 30-08-2007 |
| EP 1362872 A | 19-11-2003 | AT 329950 T | 15-07-2006 |
| | | CA 2426740 A1 | 18-10-2003 |
| | | DE 10217350 C1 | 18-12-2003 |
| | | DK 1362872 T3 | 16-10-2006 |
| | | ES 2266670 T3 | 01-03-2007 |
| | | US 2004014929 A1 | 22-01-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6720402 B
- US 6388043 B
- US 6160084 B
- US 7217744 B
- US 6852825 B
- US 7037984 B
- WO 9942528 A
- WO 9942147 A
- WO 2004046221 A
- WO 2004062706 A
- WO 2004090042 A
- WO 2005012388 A
- WO 2005028534 A
- WO 2007096708 A
- EP 1846470 A
- EP 1818348 A
- EP 1818161 A
- EP 1837160 A
- EP 1818346 A
- WO 2004006885 A
- US 20060140999 A
- US 6160084 A
- US 5108755 A